# EUROPEAN PATENT APPLICATION

(11) **EP 1 640 434 A1**
(43) Date of publication of application: **29.03.2006**
(21) Application number: 04255761.1
(22) Date of filing: 22.09.2004
(51) Int. Cl.: C10G 47/20, C10G 49/00, C10G 65/12, B01J 29/24, B01J 29/76, B01J 29/80

(54) **Hydrocracking process and catalyst composition**

(71) Applicant: Indian Oil Corporation Limited, Mumbai 400051, Maharashtra (IN)
(72) Inventor: The designation of the inventor has not yet been filed
(74) Representative: Arnold, Carol Alice

(57) **Abstract**

The invention provides a hydrocracking process which comprises reacting a naphtha boiling range hydrocarbonaceous feedstock with a source of hydrogen in the presence of a catalyst composition, which comprises a Group VIII metal and optionally a Group VIb metal on a support which comprises at least 20 wt% of a crystalline molecular sieve having pores with a largest diameter in the range of from 0.65 nm to 0.9 nm, at a pressure in the range of from 10 to 120 bar, a temperature in the range of from 300 to 450°C, and a space velocity in the range of from 2 to 20 mol/mol. Also provided is the catalyst composition, a process for its preparation and a stacked bed including such a composition. The present invention also relates to the process for the production of high octane, low olefin, low di-olefin, low sulphur, low nitrogen LPG (suitable for automobile applications) and gasoline pool component (having octane of more than 87) through hydrocracking of naphtha range petroleum feedstock.

## Description

### Field of the Invention

The present invention concerns a hydrocracking process for the hydrocracking of naphtha feedstocks to produce LPG fractions, catalyst compositions utilised therein, and their preparation and use in stacked bed formation.

### Background of the Invention

Catalytic hydrocracking is well established in the art and generally involves contacting heavy hydrocarbons, e.g. vacuum gas oils, with hydrogen in the presence of a bifunctional catalyst which is capable of simultaneously cracking heavy hydrocarbons into lighter hydrocarbons and also hydrogenating olefinic and aromatic compounds to paraffins and naphthenes.

The products of conventional catalytic hydrocracking include gaseous material such as methane, ethane and liquefied petroleum gas (LPG, a mixture of C₃-C₄ hydrocarbons), naphtha, middle distillates such as kerosine, jet fuel, diesel oils and heating oils, and hydrowax. There has been a great deal of work carried out over the years to develop catalytic hydrocracking processes that exhibit improved selectivity for middle distillates with minimum formation of gaseous material, i.e. to develop processes whose product slates contain low amounts of the gaseous materials methane, ethane and LPG, and high amounts of middle distillates. However, such a product slate is not always desired or required. Indeed, in some countries around the world, particularly in the developing countries, there is considerable demand for liquefied petroleum gas (LPG) which is used primarily as a domestic cooking fuel.

In such countries it would be desirable to be able to convert C₅ and higher hydrocarbons selectively into the LPG gaseous fractions with minimal methane and ethane production. It would also be desirable to ensure that the any aromatic content in the feed is not cracked nor hydrogenated alongside the selective hydrocracking process - such retained aromaticity can ensure a retained high octane number which is desirable in such fuels. It would also be desirable to promote isomerisation reaction which would enhance the octane number.

Refineries having excess available naphtha are exploring various possibilities for converting the naphtha into more useful and valuable products. LPG demand in certain parts of the world, particularly the Asian region, is envisaged to increase manifoldly in the coming years. This increase in demand and higher price of LPG along with excess availability of naphtha is forcing the refiners of those regions to explore various strategies for maximization of LPG at the cost of naphtha, for higher profitability. Also, with increased stress to reduce pollution caused by vehicle emissions due to increased numbers of automobiles, demand for LPG (an environmentally friendly fuel) is likely to rise in the future for automobile applications. Further, the option of hydrocracking naphtha into LPG would be beneficial for all refiners in terms of increased flexibility for meeting products' slate requirements as governed by the market.

Current refinery production of LPG is mainly from Crude Distillation Unit (CDU), and secondary processing units such as Fluid Catalytic Cracking (FCC) Unit, Vacuum Gas Oil (VGO) hydrocracking unit, Delayed Coker unit (DCU), etc. The demand for naphtha product is forecast to decline in the near future, as many of the current users (fertilizer and power generation units) are likely to switch over to natural gas. In such a scenario, hydrocracking of low value and surplus naphtha into high value LPG, which can also serve as an automobile fuel in addition to a domestic cooking fuel provides a viable and economic process technology for improving overall profitability of a refinery.

There are a few proposals of processes for hydrocracking naphtha range feedstock into LPG in the art.

In 1978, US-A-4,121,996 proposed the use of a catalyst containing a Group VIII metal on an extruded support consisting of 15-40 wt% Al₂O₃ and 60-85 wt% mordenite for the hydrocracking of naphtha to LPG at a liquid space velocity of 1 to 60 hr⁻¹, hydrogen to oil ratio of 5,000 to 15,000 ft³/bbl, 300 to 1800 psig, and approximate 600 to 850°F to produce 100% LPG. The mordenite required had an effective pore diameter of from 4 to 6.6 Å and a silica to alumina ratio of 9 to 12. The high percentage of such a mordenite was stated to be advantageous, but by 1980 the same inventor found it possible to obtain 100% LPG by using a platinum catalyst having a 25 wt% mordenite support wherein the platinum was incorporated utilising a solution having a pH greater than 6 (US-A-4,209,384).

WO 02/44306 proposes a process which produces aromatic hydrocarbon compounds and LPG from a hydrocarbon feedstock having boiling points of 30-250°C in presence of a zeolitic catalyst. Aromatic components in the hydrocarbon feedstock are converted to BTX-enriched components of liquid phase through hydrodealkylation and/or transalkylation and nonaromatic components are converted to LPG enriched gaseous material through hydrocracking. The catalyst is of platinum/tin or platinum/lead on a support of 10 to 95 wt% of mordenite, zeolite beta, ZSM-5 or mixtures thereof. The LPG yield achieved, however, is only around 25 to 30 wt%, and the methane/ethane fraction is around 10-15 wt% of the product.

It would be desirable to have a hydrocracking process by which both high octane LPG and gasoline can be produced, which would be profitable in order to meet the future demand of LPG suitable for automobile applications and to tackle the problem of disposal of low value surplus naphtha in refineries.

### Summary of the Invention

The present invention proposes a relatively low pressure hydrocracking process for production of high octane, low olefin, low di-olefin, low sulphur and low nitrogen LPG (suitable for automobile applications) and gasoline pool component, with very high conversion using especially Ni-W on Beta/ZSM5 catalyst. The process has the capability of producing high octane, low olefin, low di-olefin, low sulphur and low nitrogen LPG from a variety of naphtha range feedstock (both straight run as well mixture of straight run and cracked) having high sulphur (up to 500 ppmw) and nitrogen (up to 15 ppmw) at relatively low pressure, low hydrogen to oil ratio and high space velocity. It has been found that the process can produce approximately 70-85 wt% (on fresh feed basis) of high octane, low olefin, low di-olefin, low sulphur and low nitrogen LPG suitable as automobile fuel. The residual naphtha is highly branched light naphtha with a research octane number (RON) >87 and ideal for blending into the gasoline pool.

Accordingly, the present invention provides a hydrocracking process which comprises reacting a naphtha boiling range hydrocarbonaceous feedstock with a source of hydrogen in the presence of a catalyst composition, which comprises a Group VIII metal and optionally a Group VIb metal on a support which comprises at least 20 wt% of a crystalline molecular sieve having pores with a largest diameter in the range of from 0.65 nm to 0.9 nm at a pressure in the range of from 10 to 120 bar, a temperature in the range of from 300 to 450°C, and a space velocity in the range of from 0.5 to 5.0 h⁻¹ in a reactor wherein the ratio of hydrogen source to feedstock is in the range of from 2 to 20 mol/mol.

Most preferably the present invention provides a hydrocracking process for production of high octane LPG having octane number above 88, low olefin, low di-olefin, low sulphur and low nitrogen suitable for automobile applications and high octane gasoline component having octane of more than 87, from naphtha range petroleum feedstock, said process comprising the step of reacting the petroleum feed with a source of hydrogen in the presence of a nickel-tungsten on Beta zeolite/ZSM-5 or nickel-tungsten on mordenite/ZSM-5 catalyst at a pressure in the range of 25 to 110 bar, a temperature in the range of 320°C to 420°C and space velocity in the range of 0.5 to 4.0 h⁻¹ in a reactor wherein the source of hydrogen to oil ratio is in the range of 4 to 20 mol/mol.

The present invention further provides a catalyst composition suitable for the hydrocracking of a naphtha-containing feedstock, which comprises a Group VIII metal and optionally a Group VIb metal on a support which comprises at least 20 wt% of a crystalline molecular sieve having pores with a largest diameter in the range of from 0.65 to 0.9 nm.

The present invention additionally provides a stacked catalyst bed formation comprising a first catalyst bed and a second catalyst bed, wherein the first catalyst bed is the first to be exposed to the feedstock and comprises a catalyst composition of the invention, and the second catalyst bed comprises a catalyst composition which comprises a hydrogenation metal on a support comprising a molecular sieve having pores with a largest diameter of 0.6 nm or less, preferably ferrierite and/or ZSM-5.

### Brief Description of the Drawings

The accompanying drawings illustrate a process line-up and the performance of exemplified catalysts of the invention alongside comparison catalysts:
- Figure 1: is a schematic line diagram typical for the process of the invention.
- Figure 2: shows the LPG yield versus C₇ conversion versus time on stream in a large scale activity test.
- Figure 3: shows the LPG yield versus C₅₊ conversion for various tested catalysts
- Figure 4: shows the C₁-C₂ yield versus C₅₊ conversion from the same activity testing as for Fig.3
- Figure 5: shows the C₅ remaining versus C₅₊ conversion from a further testing primarily of catalysts of the invention

### Detailed Description of the Invention

Within a wide range of conventional zeolitic supported hydrocracking catalysts, it has now been found that certain zeolites having a high effective pore diameter can hydrocrack hydrocarbonaceous feedstocks with a high selectivity to LPG (C₃ and C₄ fractions) while minimising methane and ethane production under specific reaction conditions. Other conventional zeolitic supported hydrocracking catalysts using a zeolite having a high effective pore diameter but also larger pores, channels or cages higher than 0.9 nm in diameter (zeolite Y based catalysts) were found to be unable to produce LGP under the same conditions; catalysts using zeolites of a lower maximum effective pore diameter gave a much lower LPG yield alongside an undesirably high methane and ethane yield under these conditions.

Combinations of different zeolites in the catalyst support (particularly zeolite Beta and/or mordenite with ZSM-5) can provide synergistic LPG selectivity. Furthermore, combinations of different catalyst compositions (particularly a zeolite Beta and/or mordenite catalyst over a ferrierite catalyst) in a stacked bed formation can provide the most advantageous product slate.

Molecular sieves of interest in the present invention are crystalline materials having defined pores or channels within a regular crystalline structure. The structures and their pore or channel sizes are well documented in the art, for example in the "Atlas of Zeolite Framework Types", Ch. Baerlocher, W.M. Meier, and D.H. Olson, 5^{th} Edition, Elsevier Amsterdam 2001, which also documents references describing how these materials are to be prepared. As used herein 'pores with a largest diameter' are crystallographic free diameters calculated as in the "Atlas of Zeolite Framework Types", idem. The term denotes the largest channel width or pore diameter in the molecular sieve structure.

In the context of the present specification, the term "molecular sieve" also includes the corresponding (hydrothermally) stabilised and dealuminated derivatives and such derivatives as may be obtained by isomorphous substitution and cation exchange. Methods for the cation exchange, (hydrothermal) stabilisation, dealumination and isomorphous substitution of molecular sieves are well known in the art and are not therefore further discussed in the present specification. The term "crystalline molecular sieve" will also be used herein interchangeably with the term "zeolite".

Suitably an aluminosilicate zeolite is used in the present invention. In the present specification, unless otherwise indicated, the silica to alumina molar ratio (SAR) of a zeolite is the molar ratio as determined on the basis of the total or overall amount of aluminium and silicon (framework and non-framework) present in the zeolite, i.e. it is the bulk silica to alumina ratio.

The catalyst support may contain a single zeolite material or a combination of two or more of the same or different zeolite types.

The support of the catalyst composition of the invention comprises at least 20 wt% of a crystalline molecular sieve having pores with a largest diameter in the range of from 0.65 to 0.9 nm. Preferably the support comprises at least 40 wt% of such a molecular sieve. When the only zeolitic component of the support is such a molecular sieve, then preferably at least 50 wt%, more preferably at least 60 wt%, and especially at least 70 wt%, is present. The amount of such a sieve may be at most 100 wt% but more usually will be at most 90 wt%, preferably at most 85 wt%, of the support.

The support comprises a crystalline molecular sieve having pores with a largest diameter in the range of from 0.65 nm (6.5 A) to 0.9 nm (9 A). Preferably the largest pore diameter is at least 0.66, more preferably at least 0.67 nm. Preferably the largest pore diameter is at most 0.75, more preferably at most 0.7 nm.

Preferably the molecular sieve is used in the acid (hydrogen) or ammonium form.

Preferably the molecular sieve is zeolite beta or mordenite, or a combination of the two. Most preferred is zeolite beta. However combinations of zeolite beta and mordenite may be preferred in certain circumstances. Zeolite beta and mordenite are zeolites where the largest pores are defined by a ring of 12 oxygen atoms. Faujasite zeolites also have such a 12 membered ring structure which defines channels of pore diameter 7.4 Å, however also as part of the structure there is a supercage system with channels having a largest diameter of 1.3 nm. As this exceeds the upper limit of 0.9 nm required by the invention, faujasites are excluded.

Any zeolite beta or mordenite having the specified structure and largest pore diameter may be used in the catalyst support and both zeolites are readily available commercially. The SAR of such zeolites is not critical, but good results have been found with such zeolites having a SAR in the range of from 10 to 50, preferably 15 to 30.

Where a zeolite beta is utilised in or as part of the zeolite component this may be any catalytically active zeolite beta - a crystalline zeolite described in US Patent Specification No. Re 28,341 or known from the Atlas of Zeolite Structure Types, 5th Edition, published in 2001 on behalf of the Structure Commission of the International Zeolite Association. Small crystal size zeolite beta is a particularly useful material in cracking compositions. The zeolite beta crystals are preferably less than 100 nm in size, e.g. up to 99 nm in size. More preferably, the crystals are in the range of from 20 to 95 nm in size, most preferably 70 nm or less, for example from 30, 40 or from 50 to 70 nm, in size. Zeolite beta with a higher silica to alumina molar ratio, e.g. up to, and including 60, 80, 100, 120 or 150, may also be used if desired. Most preferably, however, the zeolite beta utilised has a silica to alumina molar ratio of at least 20, and is preferably in the range of from 20 to 25.

Suitable zeolite beta materials are commonly available commercially, such as from Zeolyst International.

Mordenite is also a well-known zeolite. A preferred zeolite of the MOR type has a SAR ratio in the range of from 10 to 60, preferably 15 to 30, for example a SAR of approximately 20. Preferably, mordenite in the hydrogen or ammonium-form is used. Suitable mordenite zeolites are also commonly available commercially, eg from Zeolyst International.

In addition to the crystalline molecular sieve described above, the support may contain a further crystalline molecular sieve having pores with a largest diameter of 0.6 nm or less. Suitably the largest pore diameter is in the range of from 0.4 (4A) to 0.6 nm (6A). Examples of such zeolites include MFI zeolites, and ferrierite. Most preferred as such a second zeolite component is ZSM-5; formulations which include ZSM-5 have a propane-enriched LPG composition in the product, and have been found to limit yield loss to methane and ethane at high C₅₊ conversions.

Compositions comprising supports having zeolite beta or mordenite in combination with ZSM-5 have shown synergistic properties Most preferred are supports comprising zeolite beta and ZSM-5.

The catalyst composition of the invention may also usefully contain a binder material. This may be any inorganic refractory oxide conventionally proposed for cracking compositions, for example alumina, silica, amorphous silica alumina, titania, magnesia, zirconia, and mixtures of any two or more thereof. Such binder materials are readily available commercially. Amorphous silica alumina materials may usefully contain silica in an amount in the range of from 25 to 95 wt%, most preferably at least 40 wt%. Most preferred as a binder is alumina, particularly boehmite, pseudoboehmite, and gamma alumina.

The binder material commonly makes up the balance of the support, and therefore is suitably present in an amount of at most 80 wt%, preferably at most 60 wt%.

Useful catalyst supports are any one of the following:
a) 60 to 90 wt% zeolite beta plus 10 to 40 wt% alumina;
b) 60 to 90 wt% mordenite plus 10 to 40 wt% alumina;
c) 40 to 60 wt% mordenite or zeolite beta plus 20 to 30 wt% ZSM-5 with the balance alumina.

The hydrogenation component of the catalyst compositions of the invention is a Group VIII metal, utilised alone or in combination with a Group VIb metal. Herein reference is made to the Periodic Table of Elements which appears on the inside cover of the CRC Handbook of Chemistry and Physics ('The Rubber Handbook'), 66^{th} edition and using the CAS version notation.

Preferably the Group VIII metal is a noble or a non-noble metal. Where a noble metal is used then suitably the Group VIII metal is the only hydrogenation metal type utilised in the catalyst of the invention and is selected from platinum, palladium, and mixtures thereof, especially platinum. Where a non-noble Group VIII metal is utilised, then preferably the metal is selected from nickel, cobalt, and mixtures thereof, especially nickel, and the metal is used in conjunction with a Group VIb metal which is preferably selected from molybdenum, tungsten, and mixtures thereof, especially tungsten.

The amount of Group VIII metal and optional Group VIb metal may vary within a wide range and is dependent on the metal used. Amounts given herein are given as the metal and on basis of total catalyst. When the Group VIII metal is a noble metal, the amount is usefully in the range of from 0.01 to 0.5 wt%, preferably 0.02 to 0.4 wt%, for each Group VIII metal. Most preferably the Group VIII metal is solely platinum in an amount of from 0.01 to 0.5 wt%. When the Group VIII metal is a non-noble metal, the amount of Group VIII metal is usefully in the range of from 0.5 to 10 wt%, and the amount of Group VIb metal is in the range of from 3 to 30 wt%. Where the Group VIII metal is nickel, it is most suitably present in an amount in the range of from 2 to 5 wt%, preferably 3 to 5 wt%, with additionally molybdenum in an amount of from 5 to 15 wt%, or tungsten in an amount of from 10, preferably from 15, to 20 wt%.

For certain metal amounts it has been found that also aromatics hydrogenation can be reduced with a higher desired aromaticity remaining in the final product.

Thus, it has been found that reduction of the metals content permits an increased aromatics retention in the residual naphtha product, particularly where a nickel-tungsten catalyst is utilised. Where this is desired, it is most preferred to have nickel in an amount of approximately 3 wt% and tungsten in an amount of approximately 10 wt%.

The catalyst compositions of the present invention may be made in conventional manner by shaping the support, and combining the shaped support with the metal component. Procedures for shaping and metal combination are well known in the art and described in the literature, for example in the Catalyst Handbook, edited by Martyn V. Twigg, 1996, Manson Publishing Ltd. Shaping procedures include extrusion, pelleting and granulation. Most preferred for the catalysts of the invention is extrusion, utilising any conventional extruder. For extrusion the support may need to be combined with any one or more of water, extrusion aids, such as the commercially available materials Methocel and Superfloc (Methocel and Superfloc are trade names), and peptising agents, such as nitric acid or acetic acid. Other extrusion aids and peptising agents will be well known to those skilled in the art. In particular, a screw-type extruding machine may be used to force the mixture through orifices in a die plate to yield catalyst extrudates of the required form, e.g. cylindrical or trilobe form. The strands formed on extrusion may then be cut to the appropriate length, for example to 4 to 10 mm in length. If desired, the catalyst extrudates may be dried, e.g. at a temperature of from 100 to 300 °C for a period of 10 minutes to 3 hours, prior to calcination. Calcination is conveniently carried out in air at a temperature in the range of from 300 to 800 °C for a period of from 30 minutes to 4 hours. Preferably, the calcination is effected at a temperature in excess of 450 °C, especially at a temperature in the range of from 500 to 600 °C.

Suitable metals combination procedures include impregnation processes, wherein the support is contacted with a solution of a suitable salt of the metal component, and kneading processes where the support and the metal salt solution are mixed or co-mulled or kneaded together. Most preferred is an impregnation process, especially the conventional pore volume or incipient wetness technique, wherein the metal salt solution is applied in an amount just adequate to fill the pore volume of the support. Following the incorporation of metals onto the support, the catalyst composition may be dried and calcined under the same conditions as noted above.

Suitably the metal salt solutions are aqueous solutions of soluble salts of the Group VIII and/or Group VIb metals. Examples of suitable salts are nitrates, halides especially chlorides, hydroxides and ammonium salts. Suitable salts include, for example, chloroplatinic acid (H₂PtCl₆), tetramine nitrates and hydroxides of platinum and palladium, eg [Pt(NH₃)₄](NO₃)₂ and [Pt(NH₃)₄](OH)₂, nickel nitrate, and ammonium metatungstate.

Where the support consists of more than one material, then, preceding the shaping, the support materials are vigorously mixed or mulled together. Such mixing may be carried out in any suitable equipment, such as a Simpson mixmuller, for a sufficient period of time to ensure homogenisation, for example from 1 to 10 minutes. Usually catalyst composition made in this manner will contain metals in the oxide form. As is usual in the art, the oxide-form catalysts may be converted to the sulphide form prior to use, either presulphided ex-situ or sulphided in-situ by treatment with sulphur, hydrogen sulphide or sulphur-containing feedstocks at elevated temperature, typically of the order of 140 to 370 °C, and usually in the presence of hydrogen.

The present invention also provides a stacked catalyst bed comprising a first catalyst bed and a second catalyst bed, wherein the first catalyst bed is the first to be exposed to the feedstock and comprises a catalyst composition of the invention, and the second catalyst bed comprises a catalyst composition which comprises a hydrogenation metal on a support comprising a molecular sieve having pores with a largest diameter of 0.6 nm or less. This would be useful to improve octane quality through the conversion of any n-alkanes present.

Suitable molecular sieves for the second catalyst bed compositions are as described above, and are preferably ferrierite and/or ZSM-5. Most preferably the second catalyst support comprises ferrierite. Additionally an inorganic refractory oxide is present in the support of the second catalyst, preferably alumina. The hydrogenation metal is most suitably a Group VIII and/or Group VIb metal as previously described. The catalyst may be conveniently made by the same procedures as described above.

Most suitably the proportion of first catalyst bed to second catalyst bed would be in the range of from 50 : 50 to 90 : 10 (volume by volume); and is very suitably 80 : 20.

Very suitably prior to being exposed to the stacked bed of the invention the feedstock is treated with a pre-treatment catalyst wherein the pre-treatment bed comprises a catalyst composition having a support which comprises a crystalline molecular sieve having pores with a largest diameter of from 0.65 to 0.9 nm in a lower amount than is present in the support of the catalyst of the first catalyst bed. The pre-treatment catalyst composition is useful to enhance the thermal stability of the catalyst system, and prevent the occurrence of hot-spots arising from the more active first bed catalyst. Preferably the pre-treatment catalyst support comprises in the range of from 15 to 25 wt% of the same molecular sieve as is present in the support of the catalyst of the first catalyst bed. The remainder of the support of the pre-treatment catalyst is suitably composed of an inorganic refractory oxide, as described above, which is preferably alumina. Suitably the pre-treatment catalyst has a hydrogenation metal which is a Group VIII and/or Group VIb metal as previously described, and may be prepared by the same techniques as previously described.

The catalyst compositions of the present invention find use in the hydrocracking of naphtha range hydrocarbonaceous feedstocks to provide an LPG-rich product, and a residual naphtha component having a high retained aromaticity. An LPG yield in excess of 50 wt% and at most 90 wt% are possible with the catalyst compositions of the invention. Preferably a yield in the range of from 60 to 85 wt% is achieved, especially in the range of from 70 to 80 wt%. The most desirable products have less than 10 wt%, preferably less than 5 wt%, of methane and ethane combined.

The most useful feedstocks are thus naphtha-rich feedstocks. Such feedstocks are often contaminated with nitrogen and sulphur impurities. We have found that the activity of catalyst compositions of the invention, particularly those containing nickel and tungsten metals, is not affected by these impurities, however the impurities may usefully be reduced by the use of one or more conventional hydrodenitrification and/or hydrodesulphurisation catalysts in a further pre-treatment step.

The process of the present invention provides for the production of high octane LPG having a minimum motor octane number of 88, vapor pressure @ 40°C in the range of 520-1050 kPa gauge and eg nil free water, sulphur, nitrogen, olefins and di-olefins, and production of a high octane low sulphur naphtha, suitable as gasoline component. The said process comprises the step of reacting the naphtha range petroleum feed with a source of hydrogen, preferably hydrogen gas, in the presence of the above described bifunctional catalyst at a pressure in the range of from 10 to 120 bar, temperature in the range of from 300 to 450°C and space velocity in the range of from 0.5 to 5.0 h⁻¹ in a reactor wherein the hydrogen to oil ratio is in the range of from 2 to 20 mol/mol.

More particularly, the present invention provides an improved process for production of high octane, eg nil olefin, nil di-olefin, nil sulphur and nil nitrogen LPG (suitable for automobile applications) and gasoline pool component through hydrocracking of a wide variety of naphtha range feedstock including cracked naphtha feed stock, said process comprising the step of reacting the mixture of straight run naphtha and cracked naphtha with a source of hydrogen in the presence of a Ni-W on Beta zeolite/ZSM-5 based catalyst at a pressure in the range of 25-50 bar, temperature eg in the range of 350°C-400°C and space velocity eg in the range of 1-3 h⁻¹ in a reactor wherein the hydrogen to oil ratio is in the range of 4-10 mol/mol. The system is desirably operated in once through configuration with hydrogen recycle.

In an embodiment of the invention, it is possible to split the product into i-C₅ and n-C₅ (and heavier components) - the latter stream can be recycled back to the fresh feed for boosting residual naphtha properties, particularly octane number.

In a further embodiment of the present invention, the feedstock consists of straight run naphtha or a mixture of straight run naphtha and cracked naphtha.

In another embodiment of the present invention, the feedstock has a sulfur level in the range of 50-500 ppm.

In yet another embodiment of the present invention, the feedstock has a total nitrogen content in the range of 0.5-15 ppmw.

In yet another embodiment of the present invention, the feedstock has boiling point in the range of from 50° to 250 °C.

In a further embodiment of the present invention, the feedstock contain olefins in an amount in the range of from 0-30 wt%.

In one another embodiment of the present invention, the catalyst is nickel-tungsten supported on beta zeolite/ZSM-5 on alumina.

In an embodiment of the present invention, the metal content of nickel on beta zeolite is in the range of from 3 to 4 wt% and that of tungsten is in the range of from 15 to 20 wt%. The physical surface area of the catalyst is suitably in the range of 300 to 400, preferably 330 to 380, m²/g and pore volume is suitably in the range of from 0.2 to 0.5, preferably 0.4 to 0.5, cc/gm.

In the process of the invention, the above catalyst has been found to exhibit a very high stability with a typical deactivation rate of the order of <0.5°C/month.

In a further embodiment of the present invention, the reactor is a tubular fixed bed ractor, preferably a down flow reactor.

In one or more embodiments of the present invention, the naphtha range feedstock is mixed with a hydrogen source which is excess hydrogen, more particularly utilising a hydrogen to oil ratio at the inlet of the reactor in the range of from 4 to 10 mol/mol.

In one another embodiment of the present invention, the reactor effluent is passed through a separator to separate excess unreacted hydrogen from the reaction products, i.e. high octane, low/nil olefin, low/nil di-olefin, low/nil sulphur and low/nil nitrogen LPG and gasoline pool component.

In another embodiment of the present invention, the residual naphtha is light naphtha rich in iso-paraffins.

In still another embodiment of the present invention, the residual naphtha has sulfur <1 ppm and nitrogen <1 ppm.

In yet another embodiment of the present invention, the residual naphtha has a RON >87.

In a further embodiment of the present invention, the residual naphtha provides a very good blending stock for the gasoline pool.

In an embodiment of the invention, it is possible to commercialise the process through the revamp of an existing hydroprocessing unit (say, a VGO hydrotreating unit) .

In a further embodiment of the present invention, instead of a typical once-through configuration, unconverted naphtha can be partially recycled back to the feed to improve upon products' yields/quality.

For the process of the present invention: Feed: The feed is a naphtha range feedstock including cracked naphtha. The feedstock suitably has a boiling range of from 50 to 250°C, sulfur in the range of from 50 to 500 ppm, nitrogen 0.5 to 15 ppm, aromatics 5 to 20 wt%, olefins 0 to 30 wt% and metal <1 ppm. Naphtha feedstocks of varying quality can be utilised in the process of the present invention to produce a high LPG yield; such feedstocks include hydrocracker naphtha and coker naphtha, a cracked feedstock.
Process: In this process, feed is suitably reacted with hydrogen in presence of the catalyst in a tubular fixed bed reactor. More preferably the reaction is carried in a down flow mode. In this process, feed is preferably heated to the reaction temperature of preferably from 320 to 420°C. Hydrogen is conveniently mixed with feed at a pressure preferably from 25 to 110 bar. Hydrogen to oil ratio in the inlet of reactor is suitably maintained in the range of 4 to 20 mol/mol.

Hydrocracking reactions take place in the reactor on the active sites of catalyst under operating conditions as described above. The product coming out of the reactor is separated from excess unreacted hydrogen in a separator. Thereafter, the products are separated in the fractionator section for LPG recovery and residual naphtha (i.e. gasoline pool component). The typical process flowsheet is similar to that of a conventional hydrocracking process known by the experts in the art. However, for higher recovery of LPG, it is possible to use cryogenic distillation in a place of a conventional LPG recovery system.

By the process of the invention, the LPG yield is most usually in the range of from 70 to 85 wt% on fresh feed.

Products from the reactor can be nil olefin, nil di-olefin, nil sulphur and nil nitrogen LPG (suitable for automobile applications) and gasoline pool component. The LPG produced has a motor octane number minimum 88, vapor pressure @ 40°C in the range of 520-1050 kPa gauge, and nil free water.

The residual naphtha is light naphtha with high iso-paraffins having sulfur <1 ppm, nitrogen <1 ppm and RON <87. The residual naphtha is a very good blending stock for gasoline pool.

Typically, the process is operated in single stage once-through mode. However, it may be noted that the residual naphtha can be recycled back to the reactor for >85% conversion into high octane, low/nil olefin, low/nil di-olefin, low/nil sulphur and low/nil nitrogen LPG. Indeed if 100 % conversion to LPG and gases is desired, then the unconverted naphtha can be fully recycled back to the reactor for complete conversion. Further, in another modification of the process flow scheme, it is possible to use a fractionator to split the product into i-C₃ and n-C₅ (and heavier components) - the latter stream can be recycled back to the fresh feed for boosting residual naphtha properties, particularly octane number (which it can boost by 3-5 units).

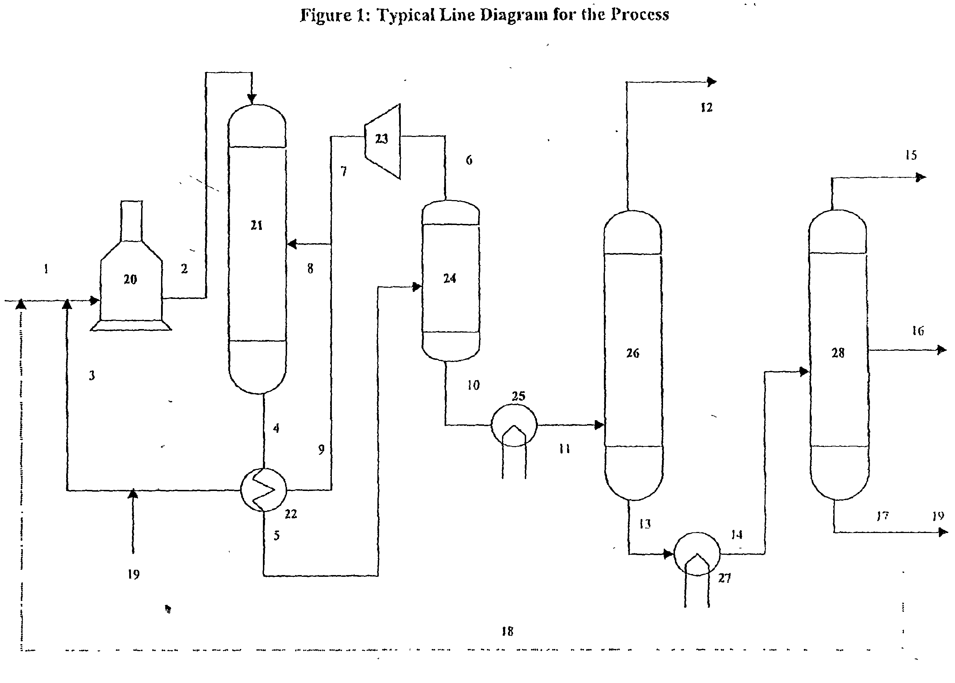

Figure 1 illustrates a typical flowsheet/line diagram for the process of the invention. In the figure, detailed mechanical equipment and process features and/or controls typical to a hydrocracking process, and which are known to the experts in the related art, are not shown. The invention however covers these aspects in conjunction with the process of the invention.

The naphtha feed stream (1) is admixed with recycle hydrogen gas (3) from a recycle gas compressor (23) and fresh make-up hydrogen (19) at approximately reaction pressure. The combined feed stream may be optionally first heated in a feed/effluent heat exchanger. The combined feed stream is heated to the reaction temperature, eg to an inlet temperature of from 350 to 380 °C, in a furnace (20). The furnace outlet (2) at reaction temperature is fed to the downflow fixed bed reactor (21) where the hydrocracking reactions take place in vapour phase. The reactor is divided into several beds depending upon process requirements and equipment design, which is not exhibited in the diagram. A useful reactor configuration is a four bed gas phase reactor having a top bed containing a guard bed of a standard HDS/HDN catalyst or a pre-treatment catalyst as mentioned above, with the remaining three beds containing the catalyst composition of the invention, or a stacked bed combination of catalysts as noted above. A part of recycle gas compressor outlet (7) is utilized as a quench gas (8) in between reactor beds for controlling the temperature rise. The number of quench gases would depend upon the number of reactor beds. The balance of recycle gas (9) before mixing with make-up hydrogen gas (19) and feed (1) is heated by a heat exchanger (22), where the reactor effluent stream (4) is used to recover the heat. The reactor effluent containing the reaction products (4) is cooled (5) to a temperature of for example 40°C by heat exchanger (22) as already mentioned. The stream (5) is fed to the high pressure separator (24) where the gas is separated from the liquid stream. The gas stream containing excess unreacted hydrogen along with some hydrocarbons (6) is recycled back to the system via recycle gas compressor (23). The liquid stream (10) rich in LPG, is passed through pre-heater (25) and is fed (11) to the de-ethaniser column (26). In the column (26), fuel gas (C₁ and C₂ gaseous hydrocarbons) is recovered (12). The column bottom (13) is heated in heat exchanger (27) and the hot stream (14) is fed to the LPG recovery column (28) wherein C₃ and C₄ hydrocarbons are recovered as LPG from the top (15) while C₅ hydrocarbon stream can be recovered as side draw (16) and the unconverted naphtha/gasoline range product (17) is obtained by the column bottom. As an option, the separation of C₅ and C₅⁺ hydrocarbons can be carried out (with recycling back of higher hydrocarbons) to boost residual gasoline octane number. As an option, a part of unconverted product can be recycled (18) back to the reactor by mixing with fresh feed (1) to increase conversion with the balance recovered as gasoline (19). As a further optional scheme, total unconverted product can also be recycled.

The present invention will now be illustrated by the following Examples.

### Examples

### Example 1 - Catalyst Preparation

A number of catalysts were prepared utilising different zeolite-containing supports. The following procedure is exemplary of how each support and catalyst was prepared.

### Preparation of Catalyst 7

### Carrier:

1692 grams of zeolite beta (SAR 25; grade CP814E ex-Zeolyst International), having a loss on ignition (LOI) of 16 wt% and 834 grams of HMPA alumina (ex-Criterion Catalysts & Technology) (having a LOI of 27 wt%) were loaded into a Simpson mixmuller device and allowed to mix for 5 minutes. Next, 20 grams of methocel, 1421 grams of a 10 wt% acetic acid solution and 436 grams of water were added to the mixmuller and mixing/kneading continued for another 40 minutes, until some lumps formed. At this stage 10 grams of Superfloc N100 was added. After 5 more minutes the mixing was complete. The powdery mix with some lumps was extruded in a Bonnot single screw extruder over TL (trilobe) 1.6 die inserts. The wet extrudates were dried for 2 hours at 120 °C in a static furnace.
After the length of the dried extrudates has been manually reduced to 4-10 mm, the extrudates were calcined in a well vented, static furnace for 2 hours at 550 °C. Catalyst:

749 grams of the above carrier (LOI: 2.54 wt%, water; PV (pore volume): 0.626 ml/g) was placed in a rotating vessel. Next, 469 ml of a solution, being composed of 532 grams (296 ml) of a solution containing 31.75 wt% tungsten (in the form of AMT ammonium metatungstate) and 7.47 wt% nickel (in the form of Ni-nitrate), diluted with 173 ml of water, was sprayed onto the carrier over the course of 15 minutes. The impregnated carrier was allowed to equilibrate for another hour in the rotating vessel. After drying for 1 hour at 120 °C (in the static furnace) the catalyst was calcined for 2 hours at 450 °C in a well vented furnace.

Following the same procedure, the catalysts listed in Table 1 were prepared.

**Table 1**

| Catalyst | Composition of Support (wt% total support) | | Hydrogenation Metals (wt% total catalyst) |
|---|---|---|---|
| | Zeolite | Binder | |
| A | 80% FER | 20% alumina | 0.35% Pt 0.25% Pd |
| B | 80% Y | 20% alumina | 0.6% Pt 1.0% Pd |
| C | 30% ZSM-5 | 70% silica | 0.35% Pt |
| 1 | 85% MOR | 15% alumina | 0.3% Pt |
| 2 | 80% BEA | 20% alumina | 0.3% Pt |
| 3 | 50% BEA 25% ZSM-5 | 25% alumina | 0.3% Pt |
| 4 | 50% MOR 25% ZSM-5 | 25% alumina | 0.025% Pt |
| 5 | 50% MOR 25% ZSM-5 | 25% alumina | 0.3% Pt |
| 6 | 30% BEA 30% ZSM-5 | 40% alumina | 0.3% Pt 0.5% Pd |
| 7 | 70% BEA | 30% alumina | 4% Ni 17% W |
| 8 | 70% BEA | 30% alumina | 3% Ni 10% W |
| 9 | 50% BEA 25% ZSM-5 | 25% alumina | 4% Ni 17% W |

In this Table
BEA is zeolite Beta of SAR 25, grade CP 814E
FER is ferrierite of SAR 20, grade CP 904C
MOR is mordenite of SAR 20, grade CBV21A or CP 504C-20
ZSM-5 is ZSM-5 grade CBV 3014E or CBV5524G
Y is dealuminated zeolite Y, grade CBV780 all from Zeolyst International.
The largest pore diameters of the BEA, FER, MOR and ZSM-5 utilised are noted in the review of activity testing results in Example 2 below.

### Example 2 - Activity Testing

For the initial activity review a three-reactor nanoflow unit was used. Deep hydrocracking of the following straight run naphtha was typically carried out at the following conditions:

| | |
|---|---|
| PP | 40 - 80 barg |
| H_{2/}feed | 1625 - 2760 Nl/l_{feed}/h^{*)} |
| LHSV | 2.0 ml/ml_{cat}/h |
| WABT | 325-425°C |

| | |
|---|---|
| *) H₂/feed = 10-17 mol_{H2/}mol_{feed} (assuming an average feed molecular weight of 100) | |

**Feed Properties**

| | |
|---|---|
| Sulfur | 152 ppm |
| Nitrogen | 0.36 ppm |
| Hydrogen | 84.33 wt.% |
| Carbon | 15.65 wt.% |

| PINA analysis, percentages by weight | | | | | |
|---|---|---|---|---|---|
| | Paraffins | Iso- paraffins | Naphthenes | Aromatics | Total |
| C3 | 0 | | | | 0 |
| C4 | -0 | 0 | | | 0 |
| C5 | 12.9 | 9.5 | 1.1 | | 23.4 |
| C6 | 12.1 | 12.8 | 4.3 | 1.0 | 30.3 |
| C7 | 7.1 | 7.2 | 5.0 | 2.0 | 21.3 |
| C8 | 4.3 | 5.6 | 3.7 | 2.6 | 16.2 |
| C9 | 1.8 | 3.8 | 1.9 | 0.42 | 8.0 |
| C10 | 0.02 | 0.47 | 0 | 0 | 0.49 |
| C11 | 0 | 0 | 0 | 0 | 0 |
| >C11 | 0 | | | 0 | 0 |
| Total | 38.4 | 39.3 | 15.9 | 6.1 | 99.8 |
| >200°C | | | | | 0.23 |
| Total Boiling | 548 | | | | |
| Point Initial | 24°C | | | | |
| Boiling Point | | | | | |
| 10 | 36°C | | | | |
| 20 | 38°C | | | | |
| 30 | 60°C | | | | |
| 40 | 70°C | | | | |
| 50 | 76°C | | | | |
| 60 | 92°C | | | | |
| 70 | 102°C | | | | |
| 80 | 119°C | | | | |
| 90 | 135°C | | | | |
| 98 | 152°C | | | | |
| Final Boiling Point | 161°C | | | | |

Tests were performed on 150-350 mg of crushed and sieved (30-80 mesh) catalyst. Reactor temperatures in the 325-425°C range were scanned to achieve appropriate conversion levels. All products were analyzed by online gas chromatography.

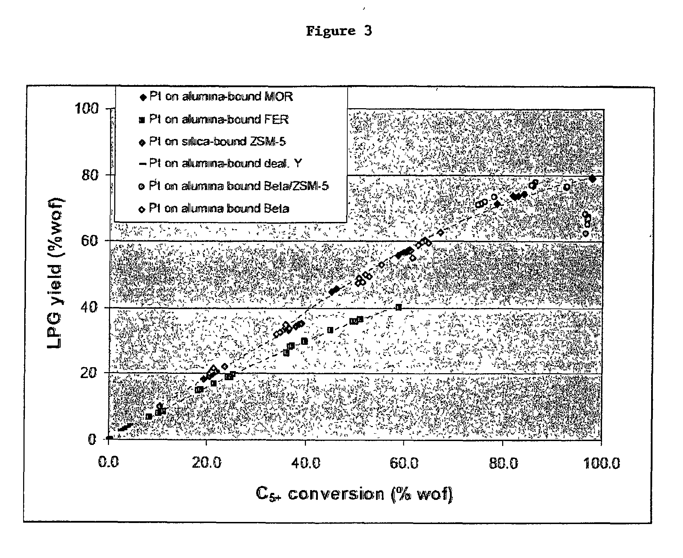

The results of testing are shown in Figures 3 to 5.

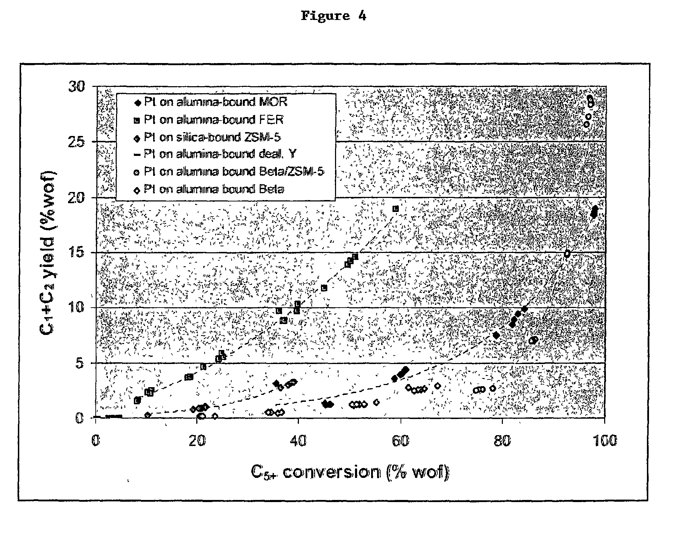

From Figures 3 and 4, it can be seen that catalysts utilising Ferrierite, and ZSM-5 yield high amounts of methane and ethane with at most 40% yield of LPG fraction; despite increased hydrogenation metal content for the Y zeolite catalyst B, negligeable conversion occurs under the reaction conditions. The most selective catalysts are those containing zeolite Beta or Mordenite. For these, LPG yields between 60-80 % can be achieved while keeping C₁+C₂ mostly below 10 wt% of feed. The catalyst based on ZSM-5 without a second zeolite starts to co-produce significant C₁+C₂, already at the lower (>40%) LPG yields. The catalyst based on Ferrierite (FER) produces even more C₁+C₂, with yields close to half the LPG yields (indeed methane and ethane appear to be true initial products of naphtha hydrocracking with this zeolite). The selectivity roughly follows the same order as the zeolite largest channel pore size: Zeolite Beta (6.7×6.6Å) and Mordenite (7.0×6.5Å) > ZSM-5 (5.6×5.3Å) » Ferrierite (5.4×4.2Å)
The catalysts based on zeolite Beta (catalysts 2 and 3) demonstrate the highest LPG yield for the lowest methane and ethane yield; of these the combined zeolite Beta and ZSM-5 based catalyst shows the best combination of high LPG yield and low methane and ethane yield.

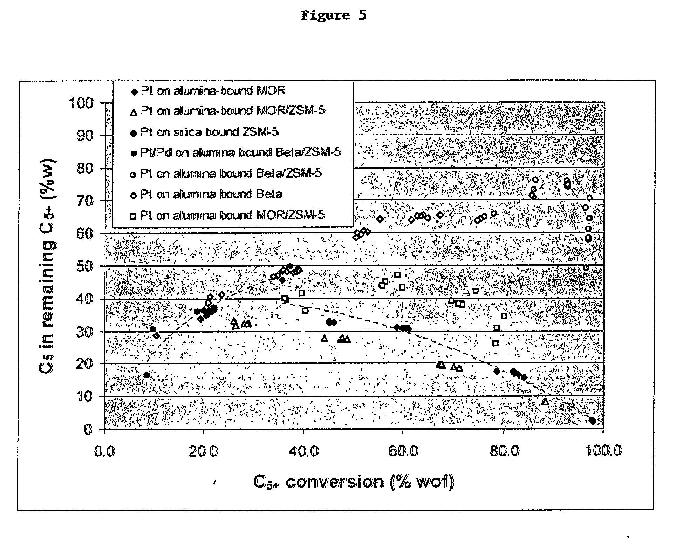

From Figure 5, it can be seen that the Mordenite and zeolite Beta-based systems display a remarkably different preference for cracking the pentane fraction in the C⁵⁺ feed. It appears that Mordenite, when fed with a mixture of C⁵⁺ paraffins, has a preference for cracking pentanes, whereas zeolite Beta and ZSM-5 have a preference for cracking hexanes (and C⁷⁺). These results mean that the zeolite Beta-based systems will produce a lighter residual naphtha, with a higher octane number (because of increased C₅ content).

### Example 3

A study of the effect of nickel-tungsten based catalysts was run. A microflow setup was used, with a combination of online (on non-condensed products) and offline analyses (on liquid products). Testing was carried out on 10 ml catalyst (whole'extrudates), 1:1 (v/v) diluted with 0.1 mm SiC powder according to standard procedures. A standard presulfiding procedure was followed. The reaction conditions were:

| | |
|---|---|
| P | 15 barg |
| H_{2/}feed | 1000 Nl/l_{feed}/h^{*}) |
| ppH₂S | 0-0.2 bar |
| LHSV | 2.0 l/l_{cat}/h |
| WABT | 325-425 °C |

The same feed as for Example 2 was used but doped with octylamine corresponding to 200 ppm N and at an H₂S partial pressure of 0.2 bar, to mimic processing of a fully hydrotreated effluent originating from a nitrogen-and sulfur-containing naphtha feed.

Catalysts 7 and 8 were tested to determine the effect of metals content on the retention of aromatics in the product of this feedstock containing added nitrogen and sulphur. Lowering of the metals content of the catalyst surprisingly led to an increased aromatics content in the product - this would provide a higher octane product - without loss of activity, indeed an increased C₅₊ conversion is obtained.

The results of testing are given in the Table below.

| Catalyst conditions | C₅₊ conversion (wt% of feed) | C₆-C₁₀ aromatics yield (wt% of feed) |
|---|---|---|
| None-feed | 0.0 | 6.10 |
| Catalyst 7; 15 barg, 350°C | 13.7 | 4.17 |
| Catalyst 8; 15 barg, 350°C | 16.4 ' | 5.19 |

### Examples 4 to 7

These Examples illustrate that the process and catalyst of the invention achieve high LPG yield and useful product properties in large-scale reactor testing and using commercially available naphtha range feedstocks.

### Example 4

Commercial straight run naphtha range feedstock "A" having properties as indicated in Table 1 was fed along with hydrogen to a tubular reactor containing a catalyst bed having properties given in Table 2. The summary of operating conditions is given in Table 3 and the summary of results and properties of the product thus obtained are tabulated in Table 4.

**Table 1: Feed "A" Properties**

| S. No | Properties | Typical value range | Exact value |
|---|---|---|---|
| 1. | Distillation, Sim TBP (D-2887) IBP/FBP, °C | 50-60/150-170 | 55/160 |
| 2. | Sulfur, ppm | 50-100 | 62 |
| 3. | Nitrogen, ppm | 0.1-2 | 0.6 |
| 4. | Specific gravity @ 15°C | 0.68-0.74 | 0.72 |

**Table 2: Typical Catalyst Characteristics**

| Chemical Composition | Ni-W on Beta Zeolite/ZSM-5 (Catalyst 9) |
|---|---|
| Physical Surface Area (BET method) | 351 m²/gm |
| Pore Volume (Nitrogen absorption) | 0.42 cc/gm |
| Ni content | 4 wt% |
| W content | 17 wt% |

**Table 3: Summary of Operating Conditions**

| Operating Conditions | Low | High |
|---|---|---|
| Reactor Temperature (°C) | 320 | 420 |
| System Pressure | 25 | 110 |
| H₂:HC Ratio, mol/mol | 4 | 16 |
| Liquid LHSV (h⁻¹) | 1 | 4 |

**Table 4: Summary of Results**

| | |
|---|---|
| LPG Yield, wt% on F/F | 70 |
| C₇⁺ Conversion, wt% | 99.96 |
| C₅⁺ Conversion, wt% | 70.80 |
| C_{3/}C₄ ratio | 0.59 |
| (C₁+C₂)/LPG ratio | 0.06 |

Typical Product Properties:
LPG
Motor Octane Number >88
Nil Free Water, Olefin, Di-olefin, Sulphur and Nitrogen Vapor pressure @ 40°C: 520-1040 kPa gauge
Residual Naphtha (Gasoline)
RON >87

### Example 5

Mixture of commercial straight run naphtha "A" and cracked naphtha feedstock "B" (blended to the extent of 10-40 wt%) having combined properties as indicated in Table 5 was fed along with hydrogen to a tubular reactor containing a catalyst bed having properties same as that in Table 2 of Example 4. The summary of operating conditions is given in Table 6 and the summary of results and properties of the product thus obtained are tabulated in Table 7.

**Table 5: Typical Combined Feed ("A" + "B") Properties**

| S. No. | Properties | Typical value range | Exact value |
|---|---|---|---|
| 1. | Distillation, SimTBP (D-2887) IBP/FBP, °C | 80-90/210-250 | 85/210 |
| 2. | Sulfur, ppm | 300-500 | 320 |
| 3. | Nitrogen, ppm | 5-15 | 7.6 |
| 4. | Specific gravity @ 15 °C | 0.70-0.76 | 0.74 |
| 5. | Olefins, wt% | 20-30 | 24 |
| 6. | Aromatics, wt% | 5-15 | 10 |

**Table 6: Summary of Operating Conditions**

| Operating Conditions | Low | High |
|---|---|---|
| Reactor Temperature (°C) | 320 | 420 |
| System Pressure | 25 | 80 |
| H₂:HC Ratio, mol/mol | 4 | 10 |
| Liquid LHSV (h⁻¹) | 1 | 4 |

**Table 7: Summary of Results**

| | |
|---|---|
| LPG Yield, wt% on F/F | 80 |
| C₇⁺ Conversion, wt% | 99.5 |
| C₅⁺ Conversion, wt% | 82.9 |
| (C₁+C₂)/LPG ratio | 0.04 |

Typical Product Properties:
LPG
Motor Octane Number >88
Nil Free Water, Olefin, Di-olefin, Sulphur and Nitrogen
Vapor pressure @ 40°C: 520-1040 kPa gauge
Residual Naphtha (Gasoline)
RON >87

### Example 6

Commercial straight run naphtha "C" having properties as indicated in Table 8 was fed along with hydrogen to a tubular reactor containing a catalyst bed having properties same as that in Table 2 of Example 4. The summary of operating conditions is given in Table 9 and the summary of results and properties of the product thus obtained are tabulated in Table 10.

**Table 8: Typical Feed "C" Properties**

| D-86 | | ASTM-D2887 | |
|---|---|---|---|
| Vol% | °C | Wt.% | °C |
| 0 | 51 | 0 | 54 |
| 5 | 54 | 5 | 57 |
| 10 | 59 | 10 | 61 |
| 20 | 65 | 20 | 66 |
| 30 | 71 | 30 | 73 |
| 40 | 84 | 40 | 82 |
| 50 | 84 | 50 | 91 |
| 60 | 92 | 60 | 99 |
| 70 | 99 | 70 | 105 |
| 80 | 108 | 80 | 112 |
| 90 | 118 | 90 | 126 |
| 95 | 126 | 95 | 132 |
| 97.3 | 135 | 100 | 155 |

**Other Properties**

| | |
|---|---|
| Total "S", mg/L | 60-67 |
| Total "N", mg/L | 1-2 |
| Specific Gravity | 0.700 |
| Paraffins, wt% | 80.2 |
| Naphthenes, wt% | 12.6 |
| Aromatics, wt% | 7.2 |
| Octane No. (NMR) | 72.7 |
| Metals, ppm | < 1 |

**Table 9: Summary of Operating Conditions**

| Operating Conditions | Low | High |
|---|---|---|
| Reactor Temperature (°C) | 350 | 420 |
| System Pressure | 25 | 50 |
| H₂:HC Ratio, mol/mol | 4 | 8 |
| Liquid LHSV (h⁻¹) | 0.5 | 4 |

**Table 10: Summary of Results**

| | |
|---|---|
| LPG Yield, wt% on F/F | 80 |
| C₇⁺ Conversion, wt% | 99.9 |
| C₅⁺ Conversion, wt% | 86.7 |
| (C₁+C₂)/LPG ratio | 0.07 |

### Typical Product Properties : Were found to be the same as that for Examples 4 and 5

### Example 7

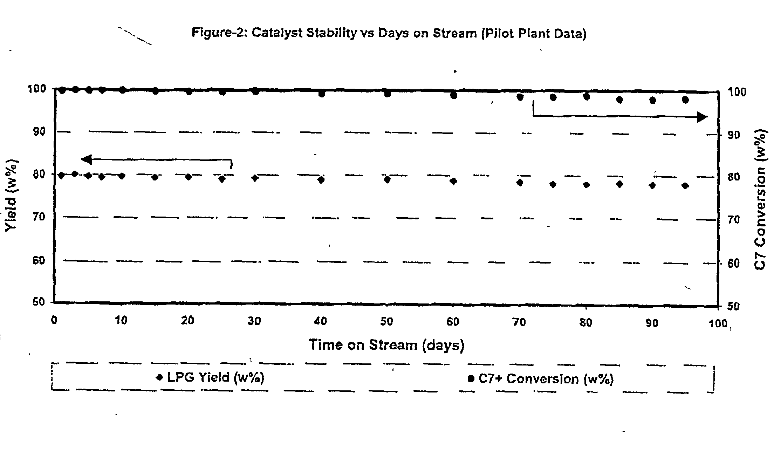

Stability data: Typical naphtha feed "A" was fed along with hydrogen to a tubular reactor containing a catalyst bed of catalyst 9, as specified in Table 2 of Example 4, in a pilot plant for more than three months of continuous operation. The summary of LPG yield and C₇ conversion with days on stream is depicted in Figure 2. It can be observed that the catalyst has very high stability with a very low deactivation rate.

## Claims

1. A hydrocracking process which comprises reacting a naphtha boiling range hydrocarbonaceous feedstock with a source of hydrogen in the presence of a catalyst composition, which comprises a Group VIII metal and optionally a Group VIb metal on a support which comprises at least 20 wt% of a crystalline molecular sieve having pores with a largest diameter in the range of from 0.65 nm to 0.9 nm, at a pressure in the range of from 10 to 120 bar (1000 to 1200 kPa), a temperature in the range of from 300 to 450°C, and a space velocity in the range of from 0.5 to 5.0 h⁻¹ in a reactor wherein the ratio of hydrogen source to feedstock is in the range of from 2 to 20 mol/mol.

2. Hydrocracking process as claimed in claim 1, wherein the support of the catalyst composition comprises at least 40 wt% of the crystalline molecular sieve.

3. Hydrocracking process as claimed in claim 1 or claim 2, wherein the crystalline molecular sieve is selected from zeolite beta, mordenite, and a combination of the two.

4. Hydrocracking process as claimed in claim 3, wherein the crystalline molecular sieve has a silica to alumina ratio in the range of from 10 to 50, preferably 15 to 30.

5. Hydrocracking process as claimed in any one of claims 1 to 4, wherein the support of the catalyst composition additionally contains a crystalline molecular sieve having pores with a largest diameter of 0.6 nm or less, preferably ZSM-5.

6. Hydrocracking process as claimed in any one of claims 1 to 5, wherein an inorganic refractory oxide is also contained in the support of the catalyst composition.

7. Hydrocracking process as claimed in any one of claims 3 to 6, wherein the support of the catalyst composition is one of the following:
a) 60 to 90 wt% zeolite beta plus 10 to 40 wt% alumina;
b) 60 to 90 wt% mordenite plus 10 to 40 wt% alumina;
c) 40 to 60 wt% mordenite or zeolite beta plus 20 to 30 wt% ZSM-5 with the balance alumina.

8. Hydrocracking process as claimed in any one of claims 1 to 7, wherein in the catalyst composition the Group VIII metal is platinum and/or palladium; or the Group VIII metal is nickel, and a Group VIb metal, preferably molybdenum or tungsten, is also present.

9. A hydrocracking process for production of high octane LPG having octane number above 88, low olefin, low di-olefin, low sulphur and low nitrogen suitable for automobile applications and high octane gasoline component having octane of more than 87, from naphtha range petroleum feedstock, said process comprising the step of reacting the petroleum feed with a source of hydrogen in the presence of a nickel-tungsten on Beta zeolite/ZSM-5 catalyst at a pressure in the range of 25 to 110 bar (2500 to 11,000 kPa), a temperature in the range of 320°C to 420°C and space velocity in the range of 0.5 to 4.0 h⁻¹ in a reactor wherein the source of hydrogen to oil ratio is in the range of 4 to 20 mol/mol.

10. Hydrocracking process as claimed in claim 8 or claim 9, wherein, as the only hydrogenation metal(s) present in the catalyst or catalyst composition, platinum is present in an amount in the range from 0.01 to 0.5 wt % as the metal and basis total catalyst; or nickel is present in an amount in the range of from 3 to 5 wt%, plus molybdenum in an amount of from 8 to 15 wt% or tungsten in an amount of from 10, preferably 15, to 20 wt%, as the metal and basis total catalyst.

11. A process as claimed in any one of claims 1 to 10, wherein the liquid product of the reaction is split into i-C₅ and n-C₅ (and heavier components), with the latter stream optionally being recycled back to add into the fresh feedstock for boosting residual naphtha properties, particularly octane number (>90).

12. A process as claimed in any one of claims 1 to 11, wherein residual naphtha is recycled back to the reactor for >85% conversion into high octane (>88) LPG with low olefin, low di-olefin, low sulphur and low nitrogen suitable for automobile applications.

13. A process as claimed in any one of claims 1 to 12, wherein the naphtha range feedstock has a sulfur content in the range of from 0 to 500 ppmw; a nitrogen content in the range of from 0 to 15 ppmw; an olefins content in the range of from 0 to 30 wt%; and a boiling point in the range of from 50 to 250°C.

14. A process as claimed in claim 13, wherein the naphtha range feedstock has an olefins content in the range of from 5-15 wt%.

15. A process as claimed in any one of claims 1 to 14, wherein the pressure is in the range of from 25 to 50 bars (2500 to 5000 kPa).

16. A process as claimed in any one of claims 1 to 15, wherein the reactor is a tubular fixed bed reactor, preferably a down flow reactor.

17. A process as claimed in any one of claims 1 to 16, wherein the reaction takes place in vapour phase.

18. A process as claimed in any one of claims 1 to 17, wherein the naphtha range feedstock is mixed with excess hydrogen as the hydrogen source, preferably with a gas to oil ratio at the inlet of reactor in the range of from 4 to 10 mol/mol.

19. A process as claimed in claim 18, wherein the reactor effluent is passed through a separator to separate excess unreacted hydrogen.

20. Hydrocracking process as claimed in any one of claims 1 to 19, wherein the catalyst composition is utilised in the form of a stacked catalyst bed comprising a first catalyst bed and a second catalyst bed, wherein the first catalyst bed is the first to be exposed to the feedstock and comprises a catalyst composition as specified in any one of claims 1 to 10, and the second catalyst bed comprises a catalyst composition which comprises a hydrogenation metal on a support comprising a molecular sieve having pores with a largest diameter of 0.6 nm or less, preferably ferrierite and/or ZSM-5.

21. Hydrocracking process as claimed in claim 20, wherein the feedstock is exposed to a pre-treatment catalyst bed situated before the first catalyst bed, wherein the pre-treatment bed comprises a catalyst composition having a support which comprises a crystalline molecular sieve having pores with a largest diameter in the range of from 0.65 to 0.9 nm in a lower amount than is present in the support of the catalyst of the first catalyst bed.

22. Hydrocracking process as claimed in claim 21, wherein the pre-treatment catalyst support comprises in the range of from 15 to 25 wt% of the same molecular sieve as is present in the support of the catalyst of the first catalyst bed.

23. Catalyst composition suitable for the hydrocracking of a naphtha-containing feedstock, which comprises a Group VIII metal and optionally a Group VIb metal on a support which comprises at least 20 wt% of a crystalline molecular sieve having pores with a largest diameter in the range of from 0.65 nm to 0.9 nm.

24. Catalyst composition as claimed in claim 23, as specified in any one of claims 2 to 10.

25. Process for the preparation of a hydrocracking catalyst composition as claimed in claim 23, which comprises shaping the support, preferably by extrusion, and combining the shaped support with the metal component, preferably by impregnation.

26. Stacked catalyst bed comprising a first catalyst bed and a second catalyst bed, wherein the first catalyst bed is the first to be exposed to the feedstock and comprises a catalyst composition as claimed in claim 23 or claim 24, or as prepared by the process as claimed in claim 25, and the second catalyst bed comprises a catalyst composition which comprises a hydrogenation metal on a support comprising a molecular sieve having pores with a largest diameter of 0.6 nm or less, preferably ferrierite and/or ZSM-5.

27. Stacked catalyst bed as claimed in claim 26, wherein the feedstock is exposed to a pre-treatment catalyst bed situated before the first catalyst bed, wherein the pre-treatment bed comprises a catalyst composition having a support which comprises a crystalline molecular sieve having pores with a largest diameter in the range of from 0.65 to 0.9 nm in a lower amount than is present in the support of the catalyst of the first catalyst bed.

28. Stacked catalyst bed as claimed in claim 27, wherein the pre-treatment catalyst support comprises in the range of from 15 to 25 wt% of the same molecular sieve as is present in the support of the catalyst of the first catalyst bed.
